# EUROPEAN PATENT APPLICATION

(11) **EP 4 491 575 A1**
(43) Date of publication of application: **15.01.2025**
(21) Application number: 23185128.8
(22) Date of filing: 12.07.2023
(51) Int. Cl.: C01C 1/04, C25B 1/14, C01D 7/07

(54) **METHOD AND SYSTEM FOR PRODUCING ANHYDROUS AMMONIA**

(71) Applicant: Omar Chaalal Consulting LTD, Birkhadem (DZ)
(72) Inventor: Chaalal, Omar, Birkhadem (DZ); Chaalal, Marouane, Birkhadem (DZ)
(74) Representative: Patentanwälte Bauer Vorberg Kayser

(57) **Abstract**

The present disclosure generally relates to a method (60) and a system (30) for producing anhydrous ammonia. An electrolysis procedure is applied to a first solution comprising at least brine water for producing at least molecular hydrogen and a second solution comprising sodium hydroxide. Sodium hydroxide from the second solution is combined with carbon dioxide from a first mixture within a first reactor for producing a third solution comprising at least sodium carbonate. The first mixture also comprises at least molecular nitrogen. The third solution and the molecular nitrogen are independently separated from the first reactor (46). The molecular nitrogen and the molecular hydrogen are mixed to form a second mixture. The second mixture is converted to form anhydrous ammonia within a second reactor (54) with the presence of a Ru-based catalyst.

## Description

The present disclosure generally relates to a method and a system for producing anhydrous ammonia.

Seawater desalination is an abundant source of freshwater and has been growing to tackle the escalating water scarcity. However, these procedures cause the seawater salinity to increase with time as a result of brine being dumped from desalination plants into seas and oceans. More particularly, seawater desalination procedures generate concentrated brine as a by-product which is usually dumped back into the sea and causes significant environmental concerns due to its harmful impacts on the marine organisms. Also, it requires expensive pumping and distribution systems and careful management to discharge into the sea.

In addition, carbon dioxide levels in the atmosphere have risen due to massive economic and industrial development around the world. Put differently, the emission of carbon dioxide (CO2) has been increasing steadily and with the increasing demand of desalinated water (especially in gulf cooperation council countries), the salinity of sea and ocean water is expected to increase at even faster rates. Thereby, severe environmental risks are caused.

As another aspect, ammonia represents an ever-needed substance for many different applications, such as for the production of all other nitrogen compounds. For example, ammonia is used in fertilizers, urea and ammonium salts. In addition, there are thoughts that ammonia may be used as a green fuel in the future, as it may possibly offer lower production and transportation costs than compared to liquid hydrogen, methanol and other energy sources.

Accordingly, there is need for a process of producing ammonia without negatively affecting environmental loads.

The objective technical problem to be solved may be considered to consist in overcoming or at least reducing the disadvantages according to the prior art. In particular, an industrial process of producing ammonia is desired, which shows improved efficiency rates, high output, and which avoids environmental pollution.

The problem is solved by the subject matter of the independent claims. Preferred embodiments are indicated within the dependent claims and the following description, each of which, individually or in combination, may represent aspects of the disclosure. Some specifics of the present disclosure are described with regard to devices and others with regard to corresponding methods. However, the advantages and preferred embodiments described with regard to the indicated devices are correspondingly to be transferred to the according methods and vice versa.

According to an aspect, a method for producing anhydrous ammonia is provided. The method comprises at least the steps of:
An electrolysis procedure is applied to a first solution comprising at least brine water for producing at least molecular hydrogen (H2) and a second solution comprising sodium hydroxide (NaOH).

Sodium hydroxide (NaOH) from the second solution is combined with carbon dioxide (CO2) from a first mixture within a first reactor for producing a third solution comprising at least sodium carbonate (Na2CO3). The first mixture also comprises at least molecular nitrogen (N2).

The third solution and the molecular nitrogen (N2) are independently separated from the first reactor.

The molecular nitrogen (N2) and the molecular hydrogen (H2) are mixed to form a second mixture.

The second mixture is converted to form anhydrous ammonia (NH3) within a second reactor with the presence of a Ruthenium-based catalyst (RU-catalyst).

Accordingly, a new process for producing ammonia is achieved which makes use of brine water and also makes use of a first mixture comprising carbon dioxide. This means that ammonia is produced while brine water and carbon dioxide are consumed. Therefore, the environmental loads are lowered while one of the most important substances for economic applications is achieved. Therefore, this method represents a process of producing green ammonia as the hydrogen used to form the ammonia is produced green as well. Put differently, the production procedure is highly efficient while the process is environmental friendly. In particular, the process may be performed without increasing the levels of salt concentrations within oceans and seas or carbon dioxide within the atmosphere. The applications of the so produced ammonia are manifold, as exemplarily described herein before.

In some embodiments, the first solution is produced by a pre-treatment of a fourth solution comprising at least reject water from a desalination plant. During the pre-treatment, metal ions may be separated from the fourth solution. For example, during the pre-treatment, metal ions, such as positively charged manganese ions (Mg2+) or calcium ions (Ca2+) may be separated from the fourth solution. In particular, heavy metal ions may be removed from the fourth solution. Thereby, the efficiency of the subsequent procedures improved.

Optionally, the pre-treatment applied to the fourth solution may be based on an electrolysis procedure.

Optionally, the sodium hydroxide (NaOH) may be formed due to the electrolysis procedure in ion form. This means that by the electrolysis procedure positively charged sodium ions (Na+) and negatively charged hydroxide ions (OH-) may be formed.

In some embodiments, the second solution also comprises at least water molecules (H2O).

Preferably, the molecular hydrogen (H2) is formed being in the gas phase.

In some embodiments, the brine water at least comprises sodium chloride (NaCl) and water molecules.

Optionally, the electrolysis procedure is performed within an electrolysis unit. the electrolysis unit may comprise a volume, such as a tank. Accordingly, it may be guaranteed that the electrolysis procedure is performed at high throughput rates.

In some embodiments, the first solution is heated to a first temperature T1 of between 50°C and 120°C prior to applying the electrolysis procedure, preferably a temperature T1 of between 70°C and 100°C, more preferably a temperature T1 of between 80°C and 90°C, more preferably a temperature T1 of substantially 85°C. Based on the so specified first temperature T1, the throughput rate of the electrolysis procedure may be improved.

Optionally, also at least molecular chlorine is produced by the electrolysis procedure. Preferably, the molecular chlorine (Cl2) is formed being in the gas phase.

In some embodiments, within the electrolysis unit, the following electrolysis process (1) may be conducted:

2*NaCl*(*aq*) + 2 *H*2*O* → 2*Na*⁺ + 2*OH⁻* (*aq*) + *Cl*2(*g*) + *H*2(*g*) (1)

Here, (aq) denotes that the respective substance is contained within a water-based solution. In addition, (g) denotes that the respective substance is being present or formed in the gas phase. According to the electrolysis process (1), molecular hydrogen can be advantageously formed which may be subsequently used for forming the anhydrous ammonia. This is achieved although brine water is consumed, whereby the environmental pollution is reduced.

Preferably, the molecular hydrogen (H2) and/or the molecular chlorine (Cl2) may be independently separated from the electrolysis unit after being formed. Accordingly, the substances may be independently used for different purposes. Especially, the molecular hydrogen (H2) may be reused within the process when combining with nitrogen (N) to form anhydrous ammonia (NH3).

In some embodiments, the second solution comprises at least 30% in parts of sodium hydroxide (NaOH). This means that the electrolysis procedure (1) is configured such that this ratio is achieved. As a result, the throughput rates and production rates of the subsequent processes may be increased. In effect, a high production rate of anhydrous ammonia is achieved.

Optionally, the first mixture is provided from an exhaust gas of an external combustion source. The first mixture is applied to heat the first solution. In particular, the first mixture is used to heat the first solution to the first temperature T1. Usually, an exhaust gas of a combustion source comprises high temperatures. Therefore, the exhaust gas may be efficiently used to heat the first solution to the first temperature T1. As a result, no additional heating source is required to achieve the first temperature of the first solution. Therefore, the procedure is energy efficient.

Preferably, the exhaust gas comprises a fourth temperature T4 of more than 120°C, preferably a fourth temperature T4 of more than 150°C, more preferably a fourth temperature T4 of more than 200°C, more preferably a fourth temperature T4 of more than 300°C, more preferably a fourth temperature T4 of 400°C or more.

In some embodiments, the exhaust gas comprises at least carbon dioxide (CO2) and nitrogen (N2). These are typical substances of exhaust gases of combustion sources. By making use of an exhaust gas of a combustion source, the carbon dioxide is efficiently consumed during the subsequent procedure such that the environmental pollution is lowered.

Preferably, the sodium hydroxide (NaOH) is combined with carbon dioxide (CO2) from the first mixture according to a first chemical reaction (2) performed within the first reactor:

2*Na*⁺ + 2*OH⁻* (*aq*) + *CO*2 → 2*Na*⁺ + *CO*3²⁻ + *H*2*O* (2)

This means that the sodium hydroxide (NaOH) is combined with the exhaust gas of the combustion source within the first reactor. Contrary to the carbon dioxide (CO2) being consumed within the course of the first chemical reaction (2), the nitrogen gas (N2) is not involved therein and is available for the subsequent formation of anhydrous ammonia.

Optionally, the first reactor comprises a bubble reactor having a first cooling jacket. Then, cooling water is provided within the first cooling jacket during the production of sodium carbonate (Na2CO3) during the course of the first chemical reaction (2). As a result, the efficiency of the first chemical reaction (2) may be improved. In particular, as the first chemical reaction (2) is exothermic, the cooling mechanism guarantees that the temperature may be kept at a desired level to optimize the reaction rate.

Preferably, the molecular hydrogen (H2) separated from the electrolysis unit is meantime stored within a first reservoir before being used for forming the second mixture. Accordingly, the very same hydrogen (H2) gained by the electrolysis procedure is reused within the ammonia (NH3) production process.

Optionally, the molecular nitrogen (N2) separated from the first reactor is meantime stored within a second reservoir before being used for forming the second mixture. Accordingly, the very same nitrogen (N2) separated from remaining portions of the exhaust gas used within the first reactor is reused within the ammonia (NH3) production process.

In some embodiments, a first molar proportion mixing ratio (R1) of the molecular nitrogen (N2) and the molecular hydrogen (H2) within the second mixture substantially is 1:3. This means that the molecular nitrogen (N2) and the molecular hydrogen (H2) are already mixed up according to a ratio corresponding to the numbers and parts within the ammonia before the second mixture is fed into the second reactor.

Preferably, the second mixture is compressed at a first pressure p1 of between 5,0 MPa and 12,0 MPa before providing the second mixture within the second reactor, preferably a pressure p1 of between 7,0 MPa and 10,0 MPa, more preferably a pressure p1 of between 8,0 MPa and 9,0 MPa, more preferably a pressure p1 of between 8,5 MPa and 8,7 MPa, more preferably a first pressure p1 of substantially 8,6 MPa. The pressure of the second mixture ensures that nitrogen and hydrogen are appropriately prepared for the treatment performed within the second reactor. Put differently, the production rate of the anhydrous ammonia is improved due to the first pressure p1 of the second mixture.

Within the second reactor, the anhydrous ammonia (NH3) may be formed according to the following second chemical reaction (3):

*N*2 *(Ru)* + 3*H*2(*Ru*) → 2*NH*3(*Ru*) (3)

Here, (Ru) denotes that the second chemical reaction (3) is performed within the presence of a ruthenium catalyst (Ru catalyst). Accordingly, 1 mole of molecular nitrogen (N2) is mixed with 3 moles of molecular hydrogen (H2) to achieve 2 moles of anhydrous ammonia (NH3) as an outcome.

Optionally, the second reactor comprises a second cooling jacket. Cooling water is provided within the second cooling jacket during the production of anhydrous ammonia (NH3). By the cooling mechanism the production rate of the anhydrous ammonia (NH3) is improved, particularly as the second mixture comprises a relatively high first pressure p1.

In some embodiments, the second reactor comprises a second temperature T2 of between 250°C and 500°C, preferably a temperature T2 of between 300°C and 450°C, more preferably a temperature T2 of between 350°C and 400°C, more preferably a second temperature T2 of between 370°C and 390°C, more preferably a temperature T2 of substantially 380°C.

Moreover, the second reactor may comprise a second pressure p2 of between 5,0 MPa and 12,0 MPa, preferably a pressure p2 of between 7,0 MPa and 10,0 MPa, more preferably a pressure p2 of between 8,0 MPa and 9,0 MPa, more preferably a pressure p2 of between 8,5 MPa and 8,7 MPa, more preferably a second pressure p2 of substantially 8,6 MPa.

This means that the first pressure p1 of the second mixture is maintained within the second reactor, i.e. pressure p2 = p1. Moreover, a specific second temperature T2 is chosen such that a high formation efficiency of the anhydrous ammonia (NH3) is achieved.

Preferably, the second reactor is provided with or coupled to an expansion valve. By making use of the expansion valve, a pressure of the anhydrous ammonia (NH3) exiting the second reactor through the expansion valve may be reduced to a third pressure p3 of between 0,5 MPa and 2,5 MPa, preferably a pressure p3 of between 1,0 MPa and 2,0 MPa, more preferably a pressure p3 of between 1,2 MPa and 1,5 MPa, more preferably a pressure p3 of between 1,3 MPa and 1,4 MPa, more preferably a third pressure p3 of substantially 1,36 MPa. As a consequence, a subsequent treatment of the ammonia (NH3) may be applied more easily as the ammonia (NH3) does not exit the second reactor having the former high second pressure p2.

In addition, the expansion valve may also guarantee that a temperature of the anhydrous ammonia (NH3) exiting the second reactor through the expansion valve is reduced to a third temperature T3 of between -100°C and 30°C, preferably a temperature T3 of between -70°C and 0°C, more preferably a temperature T3 of between -50°C and -20°C, more preferably a temperature T3 of between -40°C and -30°C, more preferably a third temperature T3 of substantially -33°C. Thereby, the subsequent treatment of the ammonia is further simplified. Put differently, the ammonia exiting the second reactor through the expansion valve may be handled more easily.

Optionally, the third pressure p3 and the third temperature T3 are guaranteed by the expansion valve for a major portion of the anhydrous ammonia (NH3) exiting the second reactor through the expansion valve. In particular, the third pressure p3 and the third temperature T3 may be guaranteed for 90% in parts of the guided ammonia (NH3), preferably for 95% in parts of the guided ammonia (NH3), more preferably for 99% in parts of the guided ammonia (NH3), more preferably for substantially 99,5% in parts of the guided ammonia (NH3).

In some embodiments, the anhydrous ammonia is condensed applying a heat exchanger. The condensed anhydrous ammonia is subsequently provided to a flash separator. In particular, the heat exchanger may be applied subsequent to the expansion valve. As the expansion valve is provided beforehand with regard to the heat exchanger, the heat exchanger may advantageously be of a more simple type. Therefore, the production costs for implementing the method are reduced. In addition, the heat exchanger ensures that the produced ammonia (NH3) is formed at least in part according to its liquid phase. Therefore, handling the ammonia (NH3) is more easy.

Preferably, liquid anhydrous ammonia is separated from gaseous anhydrous ammonia and stored with a storage device. Gaseous anhydrous ammonia is recycled to the second reactor. The flash separator enables the separation of ammonia being within the liquid phase and the gaseous phase. This is beneficial as the costs for storing ammonia (NH3) are much lower for liquid ammonia (NH3) as compared to gaseous ammonia (NH3) as to the higher density of the liquid phase.

According to another aspect, a system for producing anhydrous ammonia is provided. The system is configured to perform the method as described herein before. Accordingly, a system is achieved which is capable of producing anhydrous ammonia (NH3) at high production rates while consuming carbon dioxide (CO2) and salt (NaCl) containing brine water such that the environmental pollution is lowered.

Optionally, the electrolysis unit, the first reactor and/or the second reactor may be equipped with valves which are configured to control flow rates of substances used within the respective processes. Put differently, the valves are configured such and may be controlled such that the respective ratios of ingredients used within the respective processes may be kept as desired to optimize the production rate of the anhydrous ammonia (NH3).

In some embodiments, the electrolysis unit may comprise a membrane cell that is based on the "Chlor-alkali technique". Accordingly, the efficiency of the electrolysis procedure is improved.

Optionally, the components associated to the electrolysis unit and/or the first reactor may be made of a 90/10 copper-nickel material, further optionally omitting the electrolysis unit *per se.* This means, that piping components being associated to the electrolysis unit and/or the first reactor may for example be made of a 90/10 copper-nickel material. As a consequence, these components may be able to withstand any corrosion procedures potentially induced from seawater portions used within the respective modules.

Preferably, the second reactor, and the components of the system associated thereto, such as the expansion valve, the flash separator, the storage device respective pipes and others may be formed of stainless steel 316. This is advantageous since carbon steel and stainless steel 304 have shown not to be sufficiently compatible with ammonia under all circumstances. Therefore, the wear of the system is advantageously reduced.

All features and embodiments disclosed with respect to any aspect of the present disclosure are combinable alone or in (sub-)combination with any one of the remaining aspects of the present disclosure including each of the preferred embodiments thereof, provided the resulting combination of features is reasonable to a person skilled in the art.

The forgoing aspects and further advantages of the claimed subject matter will become more readily appreciated as the same become better understood by reference to the following detailed description when taken in conjunction with the accompanying drawings. In the drawings,
- Fig. 1 is a schematic drawing of a system for producing anhydrous ammonia according to an embodiment of the present disclosure,
- Fig. 2 is a schematic drawing of a method for producing anhydrous ammonia according to an embodiment of the present disclosure,
- Fig. 3 is a schematic drawing of the chemical processes underlying the method for producing anhydrous ammonia according to an embodiment of the present disclosure,
- Fig. 4 is a schematic drawing of the first module of the system according to an embodiment of the present disclosure,
- Fig. 5 is a schematic drawing of the second module of the system according to an embodiment of the present disclosure,
- Fig. 6 is a schematic drawing of the third module of the system according to an embodiment of the present disclosure, and
- Fig. 7 is a schematic drawing of a system for producing anhydrous ammonia indicating exemplary mass flow rates according to an embodiment of the present disclosure.

All of the features disclosed hereinafter with respect to the example embodiments and/or the accompanying figures can alone or in any subcombination be combined with features of the aspects of the present disclosure including features of preferred embodiments thereof, provided the resulting feature combination is reasonable to a person skilled in the art.

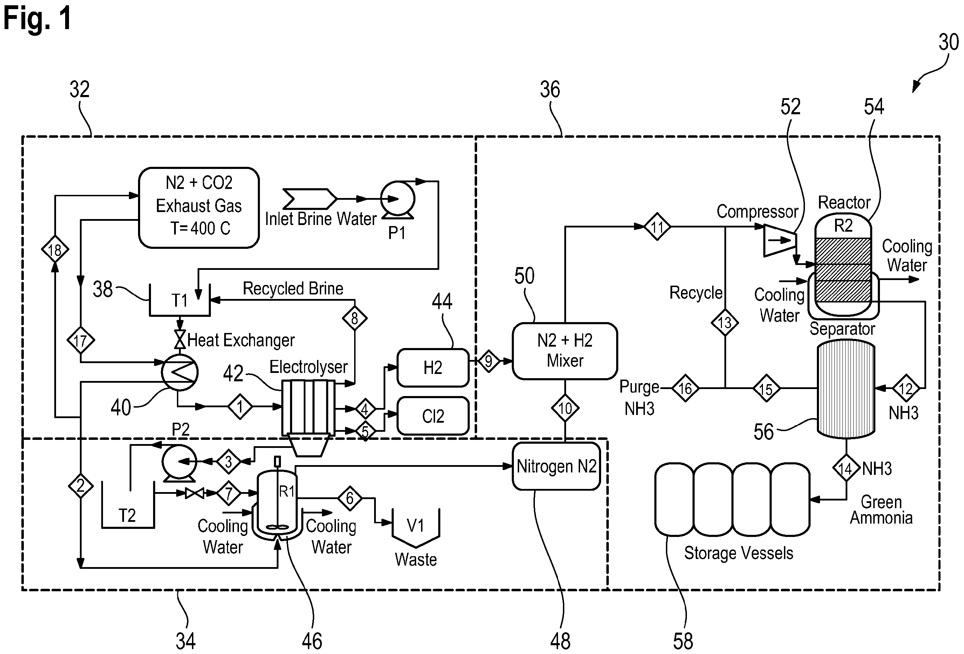

Fig. 1 is a schematic drawing of a system 30 for producing anhydrous ammonia according to an embodiment of the present disclosure. In this figure the most important components of the system 30 are denoted with reference signs. However, of course the person of ordinary skill in the art may consider specific modifications of the system 30 in some examples.

According to this embodiment, the system 30 comprises a first module 32, a second module 34, and a third module 36.

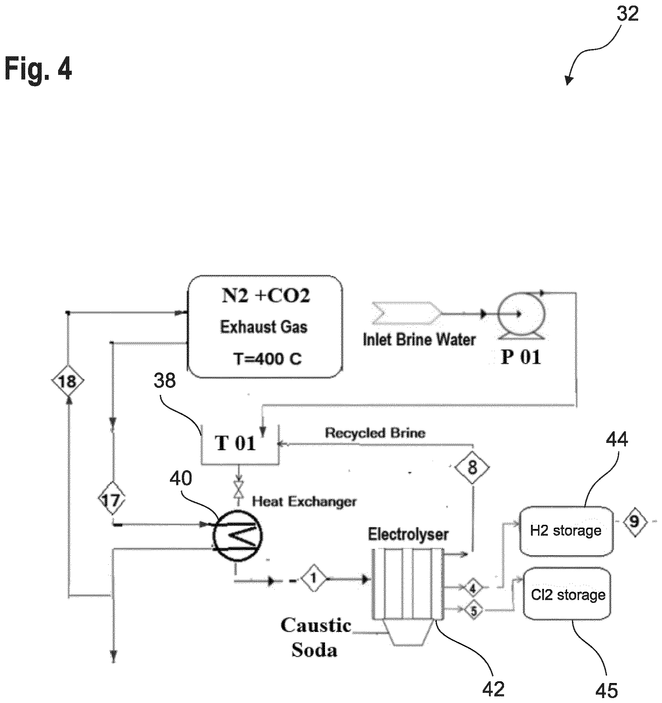

The first module 32 is shown in greater detail also in Fig. 4 which is a schematic drawing of the first module 32 of the system 30 according to an embodiment of the present disclosure.

According to this embodiment, the first module 32 comprises a first tank 38 that contains the first solution comprising brine water. The first tank 38 is at least indirectly coupled to a heat exchanger 40 such that the first solution may be heated due to the heat exchanger 40.

The first tank 38 is coupled by pipes with the electrolysis unit 42. More specifically, a stream guided from the first tank 38 to the electrolysis unit 42 may be fed through the heat exchanger 40.

At least a hydrogen (H2) storage device 44 is coupled with the electrolysis unit 42 to collect molecular hydrogen (H2) being output therefrom.

According to some examples, the first module 32 also comprises a chlorine (Cl2) storage device 45 which is coupled with the electrolysis unit 42 to collect molecular chlorine (Cl2) being output therefrom, see e.g. Fig. 4.

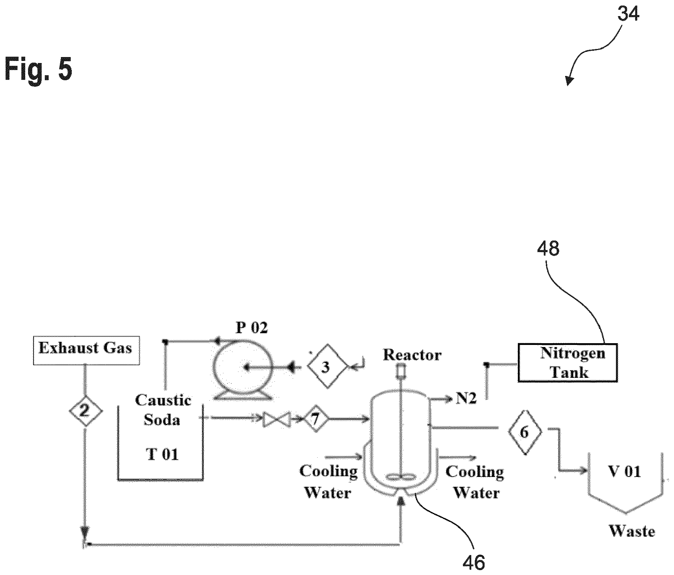

The second module 34 is shown in greater detail also in Fig. 5 which is a schematic drawing of the second module 34 of the system 30 according to an embodiment of the present disclosure.

The second module 34 comprises a first reactor 46 (R1) which is at least indirectly coupled to the electrolysis unit 42. This means that at least some output of the electrolysis unit 42 may be fed into the first reactor 46 (R1).

In addition, the first reactor 46 (R1) is indirectly coupled with the piping system of the heat exchanger 40 such that at least a portion of the first mixture used within the heat exchanger 40 may be redirected and fed into the first reactor 46 (R1)

The first reactor 46 (R1) may be a bubble reactor and comprises a first jacket which may be used with a cooling substance, such as colling water, to guarantee specific physical properties within the first reactor 46 (R1). For example, a temperature of a medium contained within the first reactor 46 (R1) may be kept constant due to the cooling mechanism established by the first jacket.

The second module 34 also comprises a nitrogen storage device 48 which is configured to collect molecular nitrogen (N2) being output from the first reactor 46 (R1).

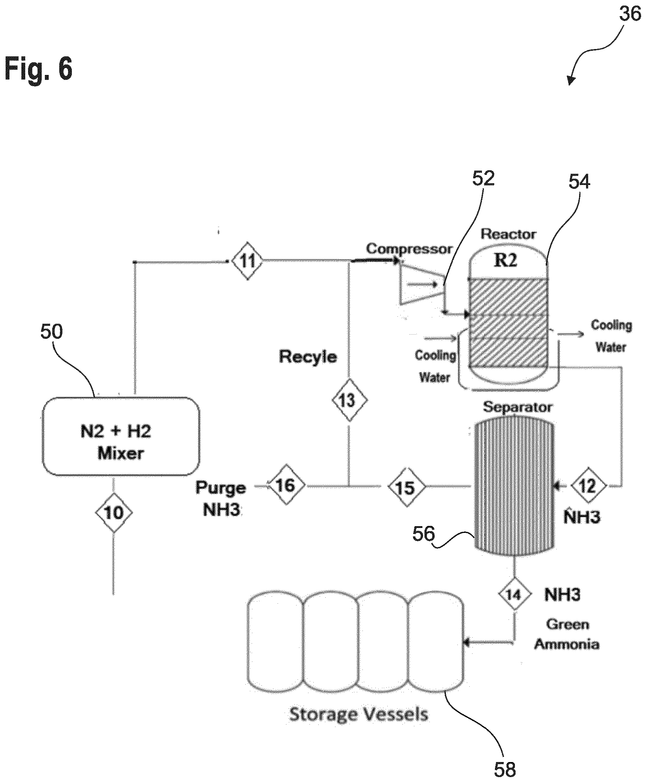

The third module 36 is shown in greater detail also in Fig. 6 which is a schematic drawing of the third module 36 of the system 30 according to an embodiment of the present disclosure.

The third module 36 comprises a mixer device 50 which is configured such that molecular nitrogen (N2) and molecular hydrogen (H2) may be mixed at specific conditions therein. For feeding the molecular nitrogen (N2) and molecular hydrogen (H2) into the mixer device 50, the mixer device 50 is coupled with the hydrogen (H2) storage device 44 and the nitrogen (N2) storage device 48.

The mixer device 50 is also coupled with a subsequent compressor 52 being configured to compress a second mixture being output from the mixer device 50.

The output of the compressor 52 is fed into a second reactor 54 (R2). The second reactor 54 (R2) comprises a second jacket which may be used with a cooling substance, such as cooling water. Accordingly, at least some physical properties of the medium contained within the second reactor 54 (R2) may be kept constant. In essence, the second reactor 54 (R2) is used to form anhydrous ammonia (NH3).

Subsequently, the anhydrous ammonia (NH3) being output from the second reactor 54 (R2) is fed into a flash separator 56. The flash separator 56 is configured to separate anhydrous ammonia (NH3) of the gas phase from anhydrous ammonia (NH3) of the liquid phase.

The flash separator 56 is coupled to an ammonia storage device 58 for collecting anhydrous ammonia (NH3) of the liquid phase.

The flash separator 56 is also coupled to the compressor 52 for recycling anhydrous ammonia (NH3) of the gas phase within the procedure.

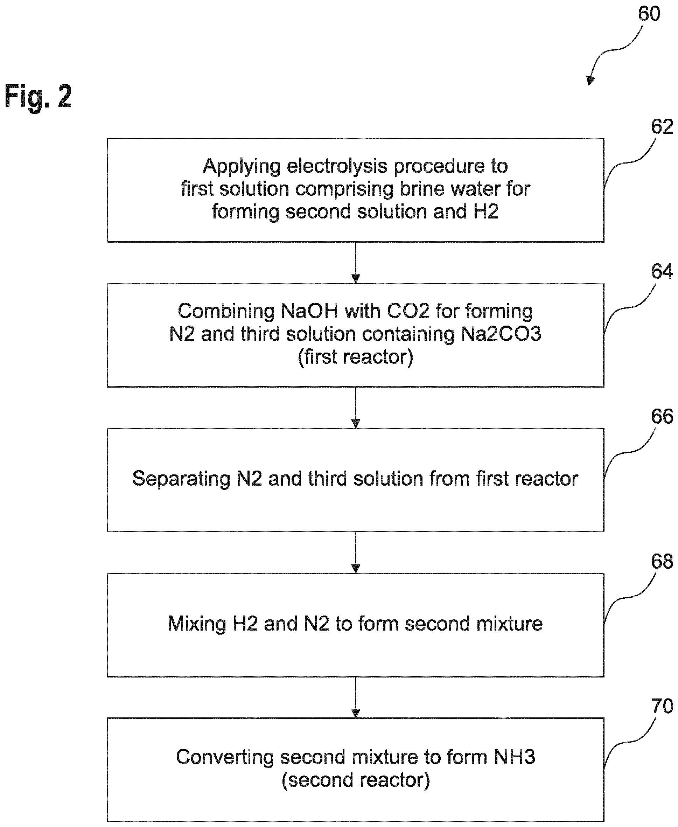

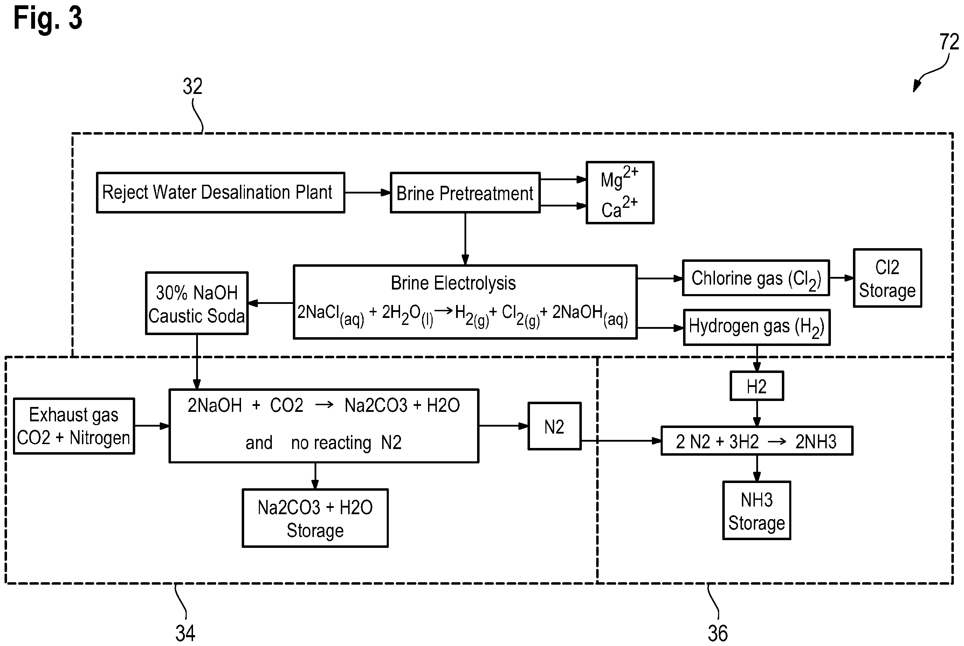

The exemplary process of producing anhydrous ammonia (NH3) will be explained in greater detail with reference to Fig. 2 which is a schematic drawing of a method 60 for producing anhydrous ammonia (NH3) according to an embodiment of the present disclosure. In this regard, Fig. 3 is a schematic drawing of the chemical processes underlying the method 60 for producing anhydrous ammonia (NH3) according to an embodiment of the present disclosure.

At an inlet of the system 30 a substance comprising brine water is provided. The substance may for example be based on reject water from a desalination plant as such reject water usually comprises a high concentration of salt, like sodium chloride (NaCl).

A pump P1 is used to supply the substance into the first tank 38. Optionally, a pre-treatment of the substance may be performed within the first tank 38. For example, an electrolysis procedure may be applied to remove heavy metal ions, such as manganese ions or calcium ions, from the substance.

Moreover, at another inlet of the system 30, an exhaust gas of a combustion source is provided according to some examples representing a first mixture. The first mixture comprises at least molecular nitrogen (N2) and carbon dioxide (CO2). According to this embodiment, the first mixture has a fourth temperature T4 of substantially 400°C or more.

The first mixture is used with the heat exchanger 40 according to forward stream 17 and back stream 18. A corresponding pump may be applied to circulate the first mixture.

Note that flow streams are depicted using diamond shape symbols in Fig. 1 and Fig. 4 to Fig. 6.

The first mixture is guided from the first tank 38 through the heat exchanger 40 towards the electrolysis unit 42 according to stream 1. The first solution being output from the first tank 38 is heated to a first temperature T1 applying the heat exchanger 40. Specifically, the first solution is heated to a first temperature T1 of substantially 85°C.

Within the electrolysis unit 42, step 62 of method 60 is performed. Accordingly, in step 62 an electrolysis procedure is applied to the (heated) first solution comprising at least brine water such that at least molecular hydrogen (H2) and a second solution comprising sodium hydroxide (NaOH) is produced. The respective chemical reaction is shown in Fig. 3, where the specific chemical reactions are assigned to those modules 32, 34, 36 to which they are associated. Put differently, within the electrolysis unit 42 carbon dioxide (CO2) is sequestrated so as to produce molecular hydrogen (H2).

The molecular hydrogen (H2) is collected within the hydrogen storage device 44 according to stream 4.

In addition, molecular chlorine (Cl2) is output from the electrolysis unit 42 and collected within the chlorine storage device 45 according to stream 5.

Stream 8 is used to recycle a solution comprising brine water from the electrolysis unit 42 into the first tank 38.

The components of the first module 32 are preferably made of a 90/10 copper-nickel material, optionally omitting the electrolysis unit 42 *per se*. Based on this material, the respective components may better withstand seawater portions generally causing corrosion.

The electrolysis procedure performed within the electrolysis unit 42 results in caustic soda to be formed which is output from the electrolysis unit 42 and supplied by second pump P2 into a second tank according to stream 3. The caustic soda represents the second solution which comprises sodium hydroxide at a ratio of 30% in parts according to this example.

The second tank comprises a valve for controlling a stream 7 of the second solution from the second tank into the first reactor 46 (R1).

In addition, a portion of the first mixture being used with the heat exchanger 40 is redirected and guided according to stream 2 into the first reactor 46 (R1) as well.

Within the first reactor 46 (R1) step 64 of method 60 is performed. More specifically, in step 64 sodium hydroxide (NaOH) from the second solution is combined with carbon dioxide (CO2) from a first mixture within the first reactor 46 (R1). As a result, a third solution comprising at least sodium carbonate (Na2CO3) is produced, see also Fig. 3 in view of the exact chemical reaction.

As the chemical reaction being conducted within the first reactor 46 (R1) is exothermic, a cooling mechanism may be applied by using a cooling substance in combination with the first jacket of the first reactor 46 (R1).

Subsequent to the chemical reaction taking place within the first reactor 46 (R1), step 66 of method 60 is performed. In step 66, the third solution and the molecular nitrogen (N2) are independently separated from the first reactor (R1).

In more detail, the molecular nitrogen (N2) which is contained within the first mixture provided to the first reactor 46 (R1) is collected within the nitrogen storage device 48. In addition, the third solution is output from the first reactor 46 (R1) as a waste product according to stream 6.

Optionally, the components of the second module 34 are made of a 90/10 copper-nickel material. Based on this material, the respective components may better withstand seawater portions generally causing corrosion.

Molecular hydrogen (H2) is subsequently fed to the mixer device 50 according to stream 9. In addition, molecular nitrogen (N2) is subsequently fed to the mixer device 50 according to stream 10.

Within the mixer device 50 of the third module 36, step 68 of method 60 is performed. Accordingly, molecular nitrogen (N2) and molecular hydrogen (H2) are mixed within the mixer device 50 according to specific properties. For example, a mixing ratio is 1 to 3 in view of nitrogen vs. hydrogen. As a result, a second mixture containing nitrogen and hydrogen is achieved by the mixer device 50 and fed according to stream 11 to the compressor 52. No chemical reaction takes place within the mixer device 50 yet.

According to this example, the compressor 52 compresses the second mixture at a first pressure p1 of 8,6 MPa. The compressed second mixture is subsequently applied to the second reactor 54 (R2).

Within the second reactor 54 (R2), step 70 of method 60 is performed. In step 70, the second mixture is converted to form anhydrous ammonia (NH3) with the presence of a Ru-based catalyst according to the chemical reaction indicated in Fig. 3. The Ru-based catalyst allows for higher conversion at lower temperature and pressure. In this regard, the second reactor 54 (R2) is configured such that the second mixture contained therein is kept at a second temperature T2 of substantially 380°C and a second pressure of substantially 8,6 MPa.

According to this example, the second reactor 54 (R2) comprises an expansion valve. The expansion valve is applied to output anhydrous ammonia (NH3) therethrough. With the aid of the expansion valve at least 99,5% in parts of the anhydrous ammonia (NH3) being output from the second reactor 54 (R2) is lowered in temperature towards a third temperature T3 of substantially -33°C and lowered in pressure towards a third pressure p3 of substantially 1,36 MPa.

Following the expansion valve, the anhydrous ammonia (NH3) is supplied to a heat exchanger utilizing a condenser (not shown in Fig. 1 or Fig. 6). The condenser is used to condense at least a portion of the ammonia (NH3) being output from the second reactor 54 (R2).

Subsequently, the anhydrous ammonia (NH3) is supplied according to stream 12 into the flash separator 56. Therein, the anhydrous ammonia (NH3) of the liquid phase is separated and subsequently collected according to stream 14 within the ammonia storage device 58.

In an alternative, the heat exchanger and the condenser may also be considered portions of the flash separator 56.

The anhydrous ammonia (NH3) of the gas phase is recycled according to stream 15.

A portion of stream 15 is used to purge the anhydrous ammonia (NH3). Accordingly, stream 15 splits into streams 13 and 16 where stream 16 is used for purging the anhydrous ammonia (NH3).

Stream 13 is recycled and guided back to the compressor 52.

Preferably, the second reactor 54 (R2), and the components of the system 30 associated thereto, such as the expansion valve, the heat exchanger, the flash separator 56, the ammonia storage device 58, respective pipes and others are formed of stainless steel 316. Therefore, these components better withstand the ammonia (NH3).

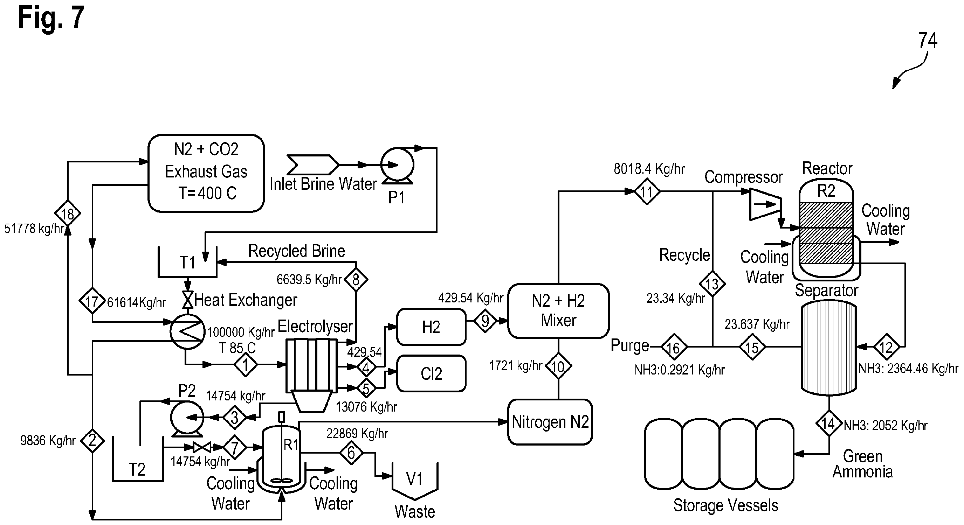

Fig. 7 is a schematic drawing of a system 30 for producing anhydrous ammonia (NH3) indicating exemplary mass flow rates according to an embodiment of the present disclosure.

The exemplary mass flow rates of the streams 1 to 18 are based on the following assumptions:
The first solution comprises brine water having 21% in weight sodium (Na).

The first mixture comprises at least 79% in parts nitrogen (N2) and 12% in parts carbon dioxide (CO2).

The molecular hydrogen (H2) and molecular nitrogen (N2) feeds into the mixer device 50 are designed to be at a 3:1 hydrogen to nitrogen ratio in parts. This ratio is maintained throughout the synthesis loop of the system 30.

The total nitrogen (N) conversion is assumed to be 98%.

The flash separator 56, optionally having the heat exchanger and/or the condenser is assumed to condense 99% of the ammonia (NH3) fed into it.

The system 30 is assumed to have an on time of 90 % per day.

The single pass reactor conversion was approximated as 21%.

The following table gives an overview of the exemplary flow rates of the streams 1 to 18 considering the here explained assumptions:

**Table 1: Exemplary mass flow rates according to method 60**

| **Stream** | **Mass flow rate (kg/hr)** | **Stream** | **Mass flow rate (kg/hr)** |
|---|---|---|---|
| 1 | 100000 | 10 | 1721 |
| 2 | 9836 | 11 | 8018,4 |
| 3 | 14754 | 12 | NH3: 2364,46 |
| 4 | 429,54 | 13 | 23,34 |
| 5 | 13076 | 14 | NH3: 2052 |
| 6 | 22869 | 15 | 23,637 |
| 7 | 14754 | 16 | NH3: 0,2921 |
| 8 | 6639,5 | 17 | 61614 |
| 9 | 429,54 | 18 | 51778 |

Based on the method 60, anhydrous ammonia (NH3) may be produced at 15 metric tons per day.

As shown in the process flow diagram presented in Fig. 7, the first mixture stream 17 (61614 Kg/hr at T4 = 400°C) enters the heat exchanger 40 to heat stream 1 comprising the first solution having brine water (100000 kg/hr; 21% weight of salt NaCl) to T1 = 85°C before entering the electrolysis unit 42. Stream 17 splits in two streams. Stream 18 (51778 Kg/hr) is recycled to the combustion source and stream 2 (9836 Kg/hr) is part of the first mixture that enters the first reactor 46 (R1). Stream 7 (14754 Kg/hr; second solution comprising sodium hydroxide) enters the first reactor 46 (R1) where the sequestration of carbon dioxide (CO2) takes place.

The exits of the first reactor 46 (R1) are streams 6 (22869 Kg/hr; third solution containing sodium carbonate to the waste for further treatment) and stream 10 (1721 kg/hr; nitrogen (N2) needed for the ammonia reaction).

The outputs of the electrolysis unit 42 are stream 3 (14774 Kg/hr the second solution containing NaOH), stream 4 (429.54 Kg/hr, green hydrogen), stream 5 (13076 Kg/hr; chlorine), and stream 8 (6639.5 Kg/hr; recycling of first solution containing brine water).

Stream 4 enters the hydrogen storage device 44 and exits as stream 9 (429.54 Kg/hr; green hydrogen) and combines in the mixer device 50 with stream 10 (1721 Kg/hr; nitrogen from the nitrogen storage device 48).

Within the mixer device 50, no chemical reaction occurs between the hydrogen (H2) and (N2). The mixture in the molar proportion H2:N2 = 3:1 represents a mass proportion 3/17 as required by the chemical reaction is represented by stream 11 (8018.4 Kg/hr). This second mixture enters the compressor 52 in the ammonia loop of module 36.

The exit stream of the compressor 52 at 83 bars enters the second reactor 54 (R2) where the reaction of hydrogen (H2) and nitrogen (N2) takes place. The exit of the reactor stream 12 (2364.46 Kg/hr; green ammonia) passes through the expansion valve. Following an isenthalpic expansion to 13 bars and a cool-down within the condenser, the stream 12 enters the flash separator 56. The exits of the flash separator 56 are stream 14 (2052 Kg/hr; green liquid ammonia) and stream 15 (green ammonia gas 23.63 Kg/hr). Stream 15 splits in two streams, namely stream 16 (ammonia purge at 0.2921 Kg/hr) and stream 13 (23.34 Kg/hr; ammonia gas recycled back to the second reactor 54 (R2)).

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

## Claims

1. A method (60) for producing anhydrous ammonia, wherein the method (60) comprises at least the steps of:
- Applying an electrolysis procedure to a first solution comprising at least brine water for producing at least molecular hydrogen and a second solution comprising sodium hydroxide,
- Combining sodium hydroxide from the second solution with carbon dioxide from a first mixture within a first reactor (46) for producing a third solution comprising at least sodium carbonate, wherein the first mixture also comprises at least molecular nitrogen,
- Separating independently the third solution and the molecular nitrogen from the first reactor (46),
- Mixing the molecular nitrogen and the molecular hydrogen to form a second mixture, and
- Converting the second mixture to form anhydrous ammonia within a second reactor (54) with the presence of a Ru-based catalyst.

2. The method (60) according to claim 1, wherein the first solution is heated to a first temperature T1 of between 50°C and 120°C prior to applying the electrolysis procedure, preferably a temperature T1 of between 70°C and 100°C, more preferably a temperature T1 of between 80°C and 90°C, more preferably a temperature T1 of substantially 85°C.

3. The method (60) according to claim 1 or 2, wherein the first mixture is provided from an exhaust gas of an external combustion source, and wherein the first mixture is applied to heat the first solution.

4. The method (60) according to any one of the preceding claims, wherein also at least molecular chlorine is produced by the electrolysis procedure.

5. The method according to any one of the preceding claims, wherein the first reactor (46) comprises a bubble reactor having a first cooling jacket, and wherein cooling water is provided within the first cooling jacket during the production of sodium carbonate.

6. The method (60) according to any one of the preceding claims, wherein a first molar proportion mixing ratio of the molecular nitrogen and the molecular hydrogen within the second mixture substantially is 1:3.

7. The method (60) according to any one of the preceding claims, wherein the second mixture is compressed at a first pressure p1 of between 5,0 MPa and 12,0 MPa before providing the second mixture within the second reactor, preferably a pressure p1 of between 7,0 MPa and 10,0 MPa, more preferably a pressure p1 of between 8,0 MPa and 9,0 MPa, more preferably a pressure p1 of between 8,5 MPa and 8,7 MPa, more preferably a pressure p1 of substantially 8,6 MPa.

8. The method (60) according to any one of the preceding claims, wherein the second reactor (54) comprises a second cooling jacket, and wherein cooling water is provided within the second cooling jacket during the production of anhydrous ammonia.

9. The method (60) according to any one of the preceding claims, wherein the second reactor (54) comprises:
a second temperature T2 of between 250°C and 500°C, preferably a temperature T2 of between 300°C and 450°C, more preferably a temperature T2 of between 350°C and 400°C, more preferably a temperature T2 of between 370°C and 390°C, more preferably a temperature T2 of substantially 380°C, and
a second pressure p2 of between 5,0 MPa and 12,0 MPa, preferably a pressure p2 of between 7,0 MPa and 10,0 MPa, more preferably a pressure p2 of between 8,0 MPa and 9,0 MPa, more preferably a pressure p2 of between 8,5 MPa and 8,7 MPa, more preferably a pressure p2 of substantially 8,6 MPa.

10. The method (60) according to any one of the preceding claims, wherein the second reactor (54) is provided with or coupled to an expansion valve, and wherein the expansion valve reduces:
a pressure of the anhydrous ammonia exiting the second reactor through the expansion valve to a third pressure p3 of between 0,5 MPa and 2,5 MPa, preferably a pressure p3 of between 1,0 MPa and 2,0 MPa, more preferably a pressure p3 of between 1,2 MPa and 1,5 MPa, more preferably a pressure p3 of between 1,3 MPa and 1,4 MPa, more preferably a pressure p3 of substantially 1,36 MPa, and
a temperature of the anhydrous ammonia exiting the second reactor through the expansion valve to a third temperature T3 of between -100°C and 30°C, preferably a temperature T3 of between -70°C and 0°C, more preferably a temperature T3 of between -50°C and -20°C, more preferably a temperature T3 of between -40°C and -30°C, more preferably a temperature T3 of substantially -33°C.

11. The method (60) according to any one of the preceding claims, wherein the anhydrous ammonia is condensed applying a heat exchanger, and wherein the condensed anhydrous ammonia is subsequently provided to a flash separator (56).

12. The method (60) according to claim 11, wherein liquid anhydrous ammonia is separated from gaseous anhydrous ammonia and stored with an ammonia storage device (58), and wherein gaseous anhydrous ammonia is recycled to the second reactor (54).

13. The method (60) according to any one of the preceding claims, wherein the first solution is produced by a pre-treatment of a fourth solution comprising at least reject water from a desalination plant, wherein metal ions are separated from the fourth solution during the pre-treatment.

14. The method (60) according to any one of the preceding claims, wherein the second solution comprises at least 30% by parts of sodium hydroxide.

15. A system (30) for producing anhydrous ammonia, the system configured to perform the method (60) according to any one of the preceding claims.
